# EUROPEAN PATENT APPLICATION

(11) **EP 0 983 976 A1**
(43) Date of publication of application: **08.03.2000**
(21) Application number: 99116781.8
(22) Date of filing: 31.08.1999
(51) Int. Cl.: C04B 24/26

(54) **Surfactant composition and its use as a dispersing agent in concrete**

(30) Priority: 01.09.1998 JP 24708898; 26.02.1999 JP 5123399
(71) Applicant: Kao Corporation, Chuo-Ku Tokyo 103 (JP)
(72) Inventor: Yamato, Fuzio, Wakayama-shi, Wakayama (JP); Sato, Takahiro, Wakayama-shi, Wakayama (JP); Hamada, Daisuke, Wakayama-shi, Wakayama (JP)
(74) Representative: HOFFMANN - EITLE

(57) **Abstract**

The present invention provides a surfactant composition which is suitable for a concrete admixture giving stable fluidity to concrete regardless of variation in kneading-time. That is, the present invention provides a surfactant composition comprising (a) a copolymer of a monomer mixture including a monomer having the formula (A) and preferably at least one co-monomer selected from the group consisting of co-monomers having the formulae (B) and (C) respectively, and comprising (b) a water-soluble salt of an aromatic sulfonic acid, at a specific ratio; 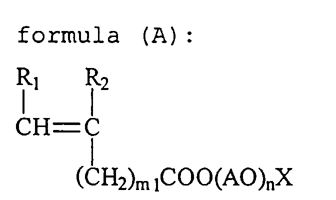 in which R₁ and R₂ are hydrogen atom or methyl, m₁ is an integer of zero to 2, (AO) is an oxyalkylene having 2 or 3carbon atoms, n is a number of 2 to 300 and X is hydrogen atom or an alkyl having 1 to 3 carbon atoms; 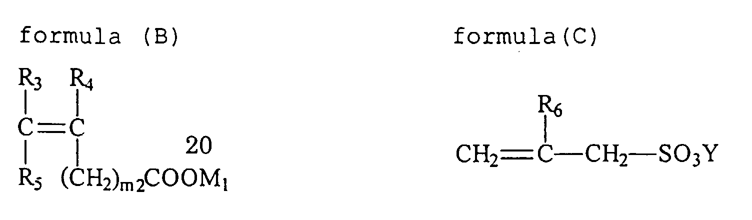 in which R₄ and R₆ are hydrogen atom or methyl; R₃ and R₅ are hydrogen atom, methyl or M₂O(CO)(CH₂)m₃; M₁, M₂ and Y are hydrogen atom, an alkali metal, an alkaline earth metal, ammonium or a mono-, di- or tri-alkylammonium which may be substituted by hydroxide group; and m₂ and m₃ are an integer of zero to 2.

## Description

### Field of the invention

The present invention relates to a surfactant composition which is suitable for a concrete product and/or a fresh concrete material by vibration compaction or centrifugation compaction.

### Prior art

Concrete products include products obtained by pouring concrete into a mold and compacting the concrete by means of an inner or external vibrator; and products obtained by centrifugation compaction, such as a pile, a pole or a Hume concrete pipe. In these concrete products, in order to ensure their strength, it is essential to add a high water-reducing agent, such as a naphthalene-based agent (a condensation product of naphthalene sulfonic acid and formaldehyde) or a melamine-based agent (a condensation product of melamine sulfonic acid and formaldehyde).

In the concrete comprising the high-performance water-reducing agent, however, its fluidity is liable to vary according to the time for kneading the concrete. Thus, the filling-up rate of the concrete drops, so that compaction becomes insufficient, or so that its endurance falls or the beauty of the surface of the concrete is damaged by the separation phenomenon of the concrete.

In order to prevent a drop in fluidity of concrete until about 90 minutes immediately after the completion of kneading the concrete, there are methods of using an aromatic dispersant, as a main component, and a small amount of a vinyl polymer (JP-A 3-28149 and 5-213644). These methods, however, do not have any advantages for stabilizing the fluidity at a just initial stage up to the completion of kneading the concrete.

### DISCLOSURE OF THE INVENTION

An object of the present invention is to provide a surfactant composition which is suitable for a concrete admixture giving stable fluidity to concrete regardless of variation in the time for kneading the concrete so as to make a stable production of concrete possible.

The present invention provides a surfactant composition comprising 100 parts by weight of (a) a copolymer of a monomer mixture including a monomer having the formula (A) and 1 to 100 parts by weight of (b) a water-soluble salt of an aromatic sulfonic acid; 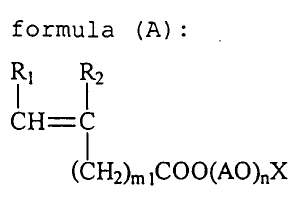 in which R₁ and R₂ are hydrogen atom or methyl, m₁ is an integer of zero to 2, (AO) is an oxyalkylene having 2 or 3carbon atoms, n is a number of 2 to 300 and X is hydrogen atom or an alkyl having 1 to 3 carbon atoms.

It is presumed that by using the (a) and the (b) at the given ratio, physical stirring power and temperature become unlikely to influence the fluidity at the initial stage up to the completion of kneading the concrete. Thus, very stable fluidity can be obtained.

Further, the present invention provides a method of mixing cement with aggregates and water in the presence of the above-mentioned composition.

Furthermore, the present invention provides use of the above-mentioned composition as a dispersing agent of concrete.

Then, the present invention provides a concrete admixture comprising the above-mentioned composition, too.

### EMBODIMENTS OF THE PRESENT INVENTION

The copolymer (a) of the present invention is obtained by polymerizing a monomer mixture including a monomer having the formula (A), in which an oxyalkylene having 2 or 3 carbon atoms is added in an average addition mole number of 2 to 300. In order to obtain stable initial fluidity in the case of using the (a) together with the (b), which will be specifically described later, the average addition mole number of the oxyalkylene is desirably from 2 to 300, preferably 60 to 300, more preferably from 60 to 200, and most preferably from 110 to 200.

Preferred examples of the monomer having the formula (A) include esters of a polyalkylene glycol having one end etherified or blocked with an alkyl group such as methoxypolyethylene glycol, methoxypolypropylene glycol, or ethoxypolyethylene polypropylene glycol and (meth)acrylic acid; and adducts of ethylene oxide (EO) or propylene oxide (PO) to (meth)acrylic acid. The addition form thereof may be any type, for example, a homo, random, block, or alternate form. More preferable example thereof is an ester of methoxypolyethylene glycol and (meth)acrylic acid.

Preferably, the copolymer (a) is obtained by polymerizing a monomer mixture comprising 50 percent or more, preferably 80-100 percent, and most preferably 100 percent by weight of both of the monomer having the formula (A) and at least one selected from the group consisting of a monomer having the formula (B) and a monomer having the formula (C), and more preferably both of the monomer having the formula (A) and formula (B); 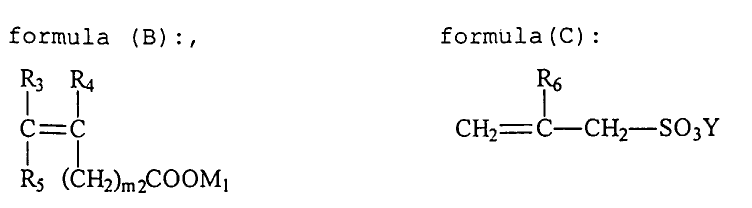 in which R₄ and R₆ are hydrogen atom or methyl; R₃ and R₅ are hydrogen atom, methyl or M₂O(CO)(CH₂)m₃; M₁, M₂ and Y are hydrogen atom, an alkali metal, an alkaline earth metal, ammonium or a mono-, di- or tri-alkylammonium which may be substituted by hydroxide group; and m₂ and m₃ are an integer of zero to 2.

Preferred examples of the monomer having the formula (B) include unsaturated monocarboxylic acid monomers such as (meth)acrylic acid and crotonic acid; unsaturated dicarboxylic acid monomers such as maleic acid, itaconic acid, and fumaric acid; and alkali metal salts, alkali earth metal salts, ammonium salts, and mono-, di-, and tri-alkylammonium salts thereof. The mono-, di-, and tri-alkylammonium salts may be substituted by hydroxide group. More preferred examples thereof include (meth)acrylic acid and alkali metal salts thereof.

Examples of the monomer having the formula (C) include allyl sulfonic acid; methallyl sulfonic acid; or alkali metal salts, alkali earth metal salts, ammonium salts, and mono-, di-, and tri-alkylammonium salts thereof. The mono-, di-, and tri-alkylammonium salts may be substituted by hydroxide group.

And then, preferably, the copolymer (a) includes 0.1 to 100 moles of (A) per 100 moles of the other co-monomer(s).

The reactive unit ratio of the monomer having the formula (A) to the monomer(s) having the formula (B) and/or the formula (C), each of which constitutes the copolymer (a), is preferably from 0.1/100 to 100/100 (mole ratio), more preferably from 10/100 to 60/100 (mole ratio), and most preferably from 20/100 to 40/100 (mole ratio), from the standpoint of better fluidity.

The weight-average molecular weight of the copolymer (a) is preferably from 5,000 to 500,000, and more preferably from 20,000 to 100,000 from the standpoint of better fluidity. The weight-average molecular weight is measured by gel permeation chromatography (converted values as sodium polystyrene sulfonate of a standard substance).

The copolymer (a) can be prepared by known methods. Examples of the methods include solution polymerization disclosed in JP-A 7-223852, 4-209737 and 58-74552. The raw materials of the copolymer (a) are caused to react with each other in water or a lower alcohol having 1-4 carbon atoms in the presence of an initiator such as ammonium persulfate and hydrogen peroxide at 50-100 °C for 0.5-10 hours. Optionally, sodium hydrogen sulfite, mercaptoethanol or the like is added thereto.

Examples of other monomers which can be copolymerized include acrylonitrile, alkyl(C₁-C₁₂) esters of (meth)acrylic acid, (meth)acrylamide, styrene, and styrene sulfonic acid.

Examples of the water-soluble salt (b) of an aromatic sulfonic acid include salts of naphthalene sulfonic acids, condensation products having a triazine ring, and water-soluble salts of polystyrene sulfonic acid. From the standpoint of greater advantages of the present invention, the examples thereof are preferably the condensation products having a triazine ring, and especially preferably water-soluble salts of formaldehyde condensation products of melamine sulfonic acid.

The water-soluble salts of formaldehyde condensation products of melamine sulfonic acid are known dispersants obtained by reacting melamine with formaldehyde to obtain N-methylol melamine; reacting the N-methylol melamine with a bisulfite to make a part of the methylol groups into a sulfomethyl group; adding an acid thereto to condense the methylol groups by dehydration, thereby preparing a formaldehyde condensation product; and changing the condensation product into an alkali metal or alkali earth metal salt thereof (see for, example, JP-A 63-37058). As commercially available products, there are known Mighty 150V-2 (made by Kao Corp.), Melment F-10 (made by Showa Denko K.K.), and the like. The polystyrene sulfonic acid is prepared, for example, by sulfonating polystyrene or polymerizing styrene sulfonic acid. As a commercially available product, there is known Gralion S-8 (made by Lion Corp.).

The composition ratio of the copolymer (a) to the water-soluble salt (b) in the present invention is from 100/1 to 100/100 (solid weight ratio), preferably from 100/5 to 100/50, and more preferably from 100/5 to 100/30. If the proportion of the water-soluble salt (b) is high, the fluidity drops abruptly to make the fluidity at the initial stage very unstable. In order to make the initial fluidity stable, it is necessary that the proportion of the copolymer (a) is high as in the present invention.

Generally, in the concrete admixture comprising the surfactant composition of the present invention, the copolymer (a) and the water-soluble salt (b) are added in such a manner that the total solid amount of the (a) and the (b) is from 0.02 to 1.0 percent, preferably from 0.1 to 0.5 percent, by weight of the cement.

The copolymer (a) and the water-soluble salt (b) in the present invention may be beforehand blended and then added to concrete, or they may be separately added to concrete. For use, they may be beforehand diluted with kneading water.

The concrete admixture containing a surfactant composition of the present invention is suitable for the production of fresh concrete and other concrete products, in particular concrete products resulting from compacting a raw concrete material by a vibrator or centrifugal force with a gravity acceleration of 3G to 60G and then molding the resultant. The present composition may be used for high-fluidity concrete having a capability of filling-up by itself without use of any vibrator and having a fluidity of 50 cm or more (as the flow value of a slump test according to JIS A-1101).

The concrete which is an object to be added of the present composition is concrete made mainly of cement, fine aggregate, or coarse aggregate. But various kinds of blast furnace slag, fly ash, silica, silica fume, or the like may be used. Known additives (or known auxiliary) may be used together. Examples thereof include an AE agent, an AE water-reducing agent, a high water-reducing agent, a retarder, an early-strengthening agent, an accelerator, a foaming agent, a gas generating agent, a defoaming agent, a viscosity agent, a waterproofing agent and an antifoamer. That is, known additives (or added materials) may be used, too.

By the way, preferably, the monomer (A) has the formula (A) in which R₁ is hydrogen atom; m₁ is zero; (AO) is oxyethylene; X is an alkyl, the co-monomer has the formula (B) in which R₃ and R₅ are hydrogen atom; m₂ is zero; and M₁ is an alkali metal.

### ADVANTAGEOUS EFFECT OF THE PRESENT INVENTION

The present invention provides a surfactant composition which is suitable for a concrete admixture giving stable fluidity to concrete regardless of variation in kneading-time and making a stable production of concrete product possible.

### EXAMPLE

### Method for estimating concrete

According to blend conditions shown in Tables 1 and 2, concrete compositions were prepared. To each of the concrete compositions was added of each additive wherein the following were blended at given solid weight ratios: each copolymer (a) shown in Table 3 and a formaldehyde condensation product of melamine sulfonic acid (b1) (Mighty 150V-2, made by Kao Corp.) or a salt of polystyrene sulfonic acid (b2) (Gralion S-8, made by Lion Corp.). Each of the concrete materials was kneaded in an amount of 30 L in a 50 L compulsion mixer, and a change in its fluidity by passage of kneading-time was measured. The results are shown in Tables 4 (the blend in Table 1) and 5 (the blend in Table 2). The amount of the additive (solid component amount to cement) was adjusted so as to exhibit, in Table 4, such a fluidity that a slump was 20 cm after 120 seconds, and to exhibit, in Table 5, such a fluidity that a slump flow was about 50 cm after 120 seconds. The slump and the slump flow were measured according to JIS A-1101.

**Table 1**

| W/C (%) | s/a (%) | Amount of units (kg/m³) | | | |
|---|---|---|---|---|---|
| | | C | W | S | G |
| 40 | 37 | 450 | 167 | 692 | 1056 |
| Used materials W: Tap water C: Normal Portland cement Specific gravity=3.16 S: River sand produced from Kino River Specific gravity=2.56 G: Crashed rocks from Takarazuka Specific gravity=2.60 s/a: Sand/ Sand + gravel (volume ratio) | | | | | |

**Table 2**

| W/C (%) | s/a (%) | Amount of units (kg/m³) | | | | |
|---|---|---|---|---|---|---|
| | | C | W | SI | S | G |
| 45 | 42.2 | 370 | 178 | 124 | 745 | 867 |
| Used materials W: Tap water C: Normal Portland cement Specific gravity=3.16 SI: blast furnace slag (specific surface area 6000cm²/g) Specific gravity=2.89 S: River sand produced from Kino River Specific gravity=2.56 G: Crashed rocks from Takarazuka Specific gravity=2.60 s/a: Sand/ Sand + gravel (volume ratio) | | | | | | |

**Table 3**

| Monomer component of copolymer (a) | | Polymerization mole ratio | Molecular weight*¹ |
|---|---|---|---|
| A | Methanol(EO)₉· Methacrylate/ Na methacrylate | 70/100 | 35000 |
| B | Methanol(EO)₂₃· Methacrylate/ Na methacrylate | 60/100 | 38000 |
| C | Methanol(EO)₄₀· Methacrylate/ Na methacrylate | 50/100 | 40000 |
| D | Methanol(EO)₆₅· Methacrylate/ Na acrylate | 40/100 | 41000 |
| E | Methanol(EO)₆₅· Methacrylate / Na acryalte / Mono Na maleate | 40/90/10 | 38000 |
| F | Methanol(EO)₁₂₀· Methacrylate/ Na methacrylate | 35/100 | 57000 |
| G | Methanol(EO)₁₂₀· Methacrylate/ Na methacrylate | 25/100 | 46000 |
| H | Methanol(EO)₁₂₀· Methacrylate/ Na methacryalte/ Na methallyl sulfonate | 25/90/10 | 44000 |
| I | Methanol(EO)₁₂₀· Methacrylate/ Na methacrylate | 10/100 | 44000 |
| J | Methanol(EO)₁₁₀(PO)₁₀*²· Methacrylate/ Na methacrylate | 25/100 | 45000 |
| K | Methanol(EO)₁₈₀ · Methacrylate/ Na methacrylate | 20/100 | 73000 |
| L | Methanol(EO)₂₅₀ · Methacrylate/ Na methacrylate | 20/100 | 84000 |
| M | Methanol(EO)₃₂₀ · Methacrylate/ Na methacrylate | 40/100 | 67000 |
| N | Hydroxyethylmethacrylate/ Methacrylic acid | 70/100 | 31000 |

| | | | |
|---|---|---|---|
| ∗1: Gel permeation chromatography (converted to a sodium polystyrene sulfonate basis) | | | |
| ∗2: EO/PO random addition | | | |

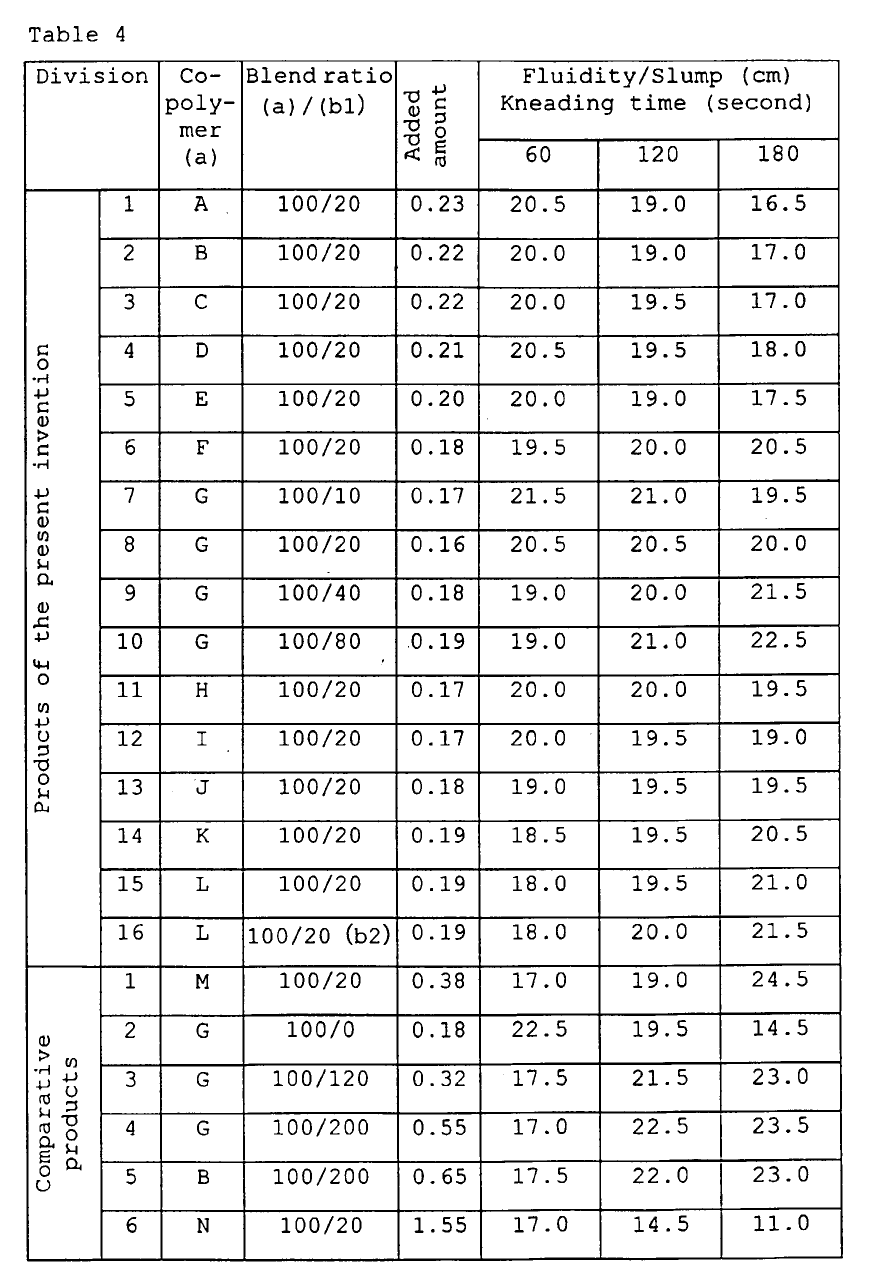

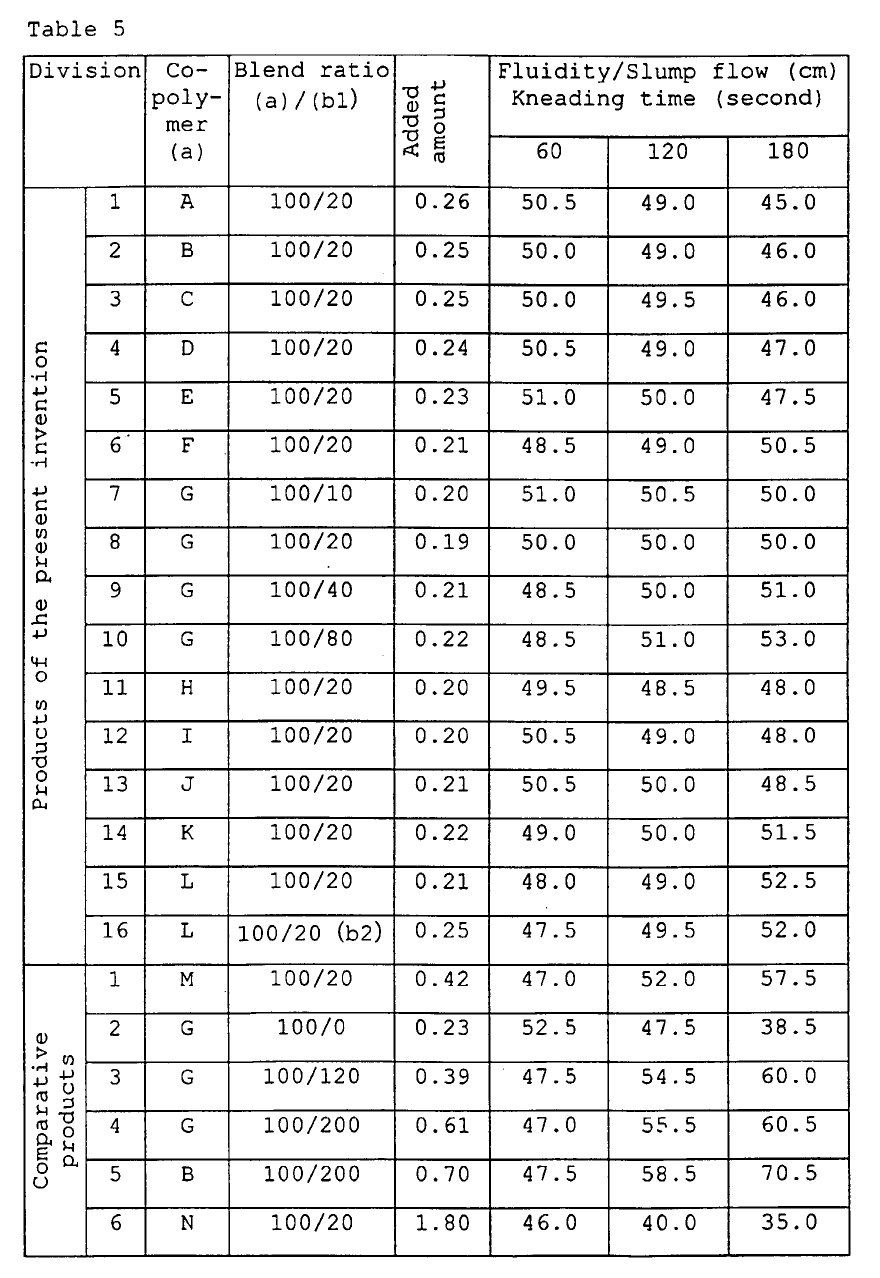

## Claims

1. A surfactant composition comprising 100 parts by weight of (a) a copolymer of a monomer mixture including a monomer having the formula (A) and 1 to 100 parts by weight of (b) a water-soluble salt of an aromatic sulfonic acid; 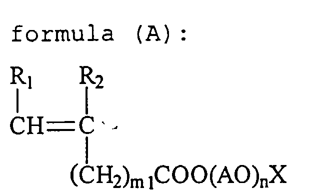 in which R₁ and R₂ are hydrogen atom or methyl, m₁ is an integer of zero to 2, (AO) is an oxyalkylene having 2 or 3carbon atoms, n is a number of 2 to 300 and X is hydrogen atom or an alkyl having 1 to 3 carbon atoms.

2. The composition as claimed in Claim 1, in which the copolymer (a) is obtained from a monomer mixture comprising 50 percent by weight or more of the monomer (A) and at least one co-monomer selected from the group consisting of co-monomers having the formulae (B) and (C), respectively; 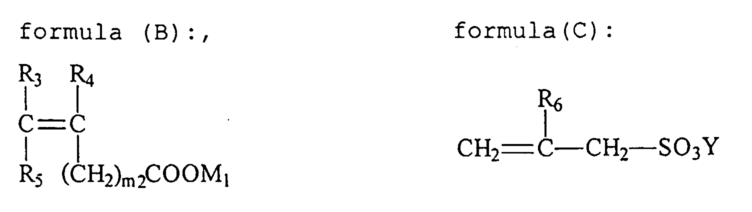 in which R₄ and R₆ are hydrogen atom or methyl; R₃ and R₅ are hydrogen atom, methyl or M₂O(CO)(CH₂)m₃; M₁, M₂ and Y are hydrogen atom, an alkali metal, an alkaline earth metal, ammonium or a mono-, di- or tri-alkylammonium which may be substituted by hydroxide group; and m₂ and m₃ are an integer of zero to 2.

3. The composition as claimed in Claim 1, in which (b) a water-soluble salt of an aromatic sulfonic acid is a condensation product including a triazine ring or a water-soluble salt of polystyrene sulfonic acid.

4. The composition as claimed in Claim 1, in which (b) a water-soluble salt of an aromatic sulfonic acid is a salt of formaldehyde condensation product of melamine sulfonic acid.

5. A method of mixing cement with aggregates and water in the presence of the composition as claimed in Claim 1.

6. Use of the composition as defined in Claim 1 as a dispersing agent of concrete.

7. A concrete admixture comprising the composition as defined in Claim 1.

8. The composition as claimed in Claim 2, in which the mole ratio of the monomer (A) to the co-monomers (B) and/or (C) ranges from 0.1/100 to 100/100 and the copolymer (a) has a weight-average molecular weight of 5,000 to 500,000.

9. The composition as claimed in Claim 2 or 8, in which the monomer (A) has the formula (A) in which R₁ is hydrogen atom; m₁ is zero; (AO) is oxyethylene; X is an alkyl and the co-monomer has the formula (B) in which R₃ and R₅ are hydrogen atom; m₂ is zero; and M₁ is an alkali metal.

10. The composition as claimed in Claim 1, in which the copolymer (a) includes 0.1 to 100 moles of (A) per 100 moles of the other co-monomer(s).
